# EUROPÄISCHE PATENTSCHRIFT

(11) **EP 2 341 313 B1**
(45) Veröffentlichungstag und Bekanntmachung des Hinweises auf die Patenterteilung: **02.03.2016**
(21) Anmeldenummer: 10015846.8
(22) Anmeldetag: 20.12.2010
(51) Int. Cl.: G01B 11/25, B26D 5/00, B26D 7/27, A22C 17/00

(54) **Abtasteinrichtung**
Sampling device
Dispositif de balayage

(30) Priorität: 21.12.2009 DE 102009059855
(43) Veröffentlichungstag der Anmeldung: 06.07.2011
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 2 101 144
- WO-A1-2005/022079
- DE-A1- 3 805 455
- JP-A- 58 143 204
- US-A- 5 555 090
- US-A1- 2007 090 189
- US-B1- 6 882 434

## Beschreibung

Die Erfindung betrifft eine Abtasteinrichtung zum Bestimmen von zumindest teilweisen Querschnittsprofilen von aufzuschneidenden Lebensmittelprodukten nach dem Lichtschnittverfahren, mit wenigstens einer Beleuchtungseinrichtung zum Erzeugen einer Lichtlinie auf der Oberfläche eines Produkts, und wenigstens einer Nachweiseinrichtung zur Aufnahme von die Lichtlinie enthaltenden Bildern der Produktoberfläche, wobei die Beleuchtungseinrichtung wenigstens eine Lichtquelle umfasst, die dazu ausgebildet ist, einen sich in Richtung eines Abtastbereiches für das Produkt in eine Abtastebene ausbreitenden und sich dabei aufweitenden Lichtstrahl zu erzeugen.

Die Erfindung betrifft außerdem eine Vorrichtung zum Aufschneiden von Lebensmittelprodukten, insbesondere einen Hochleistungsslicer, mit einer Produktzuführung, die dazu ausgebildet ist, wenigstens ein aufzuschneidendes Produkt einer Schneidebene zuzuführen, in der sich wenigstens ein Schneidmesser, insbesondere rotierend und/oder umlaufend, bewegt, und mit wenigstens einer erfindungsgemäßen Abtasteinrichtung.

Abtasteinrichtungen der eingangs genannten Art sind grundsätzlich bekannt und dienen dazu, Querschnittsprofile von aufzuschneidenden Lebensmittelprodukten nach dem Lichtschnittverfahren zu bestimmen. Dabei kann die Abtasteinrichtung in eine Aufschneidevorrichtung integriert sein, wobei aber auch eine räumlich getrennte Anordnung der Abtasteinrichtung in Frage kommt. Die Abtasteinrichtung kann insbesondere als ein "Stand-Alone"-Gerät betrieben werden. Die mit der Abtasteinrichtung ermittelten Profildaten können zu einem späteren Zeitpunkt bei der weiteren Verarbeitung des abgetasteten Produkts verwendet werden.

Die Lichtquelle umfasst insbesondere einen Laser, insbesondere einen Zeilen- oder Linienlaser. Um den sich aufweitenden, d.h. divergenten Laserstrahl zu erzeugen, kann die Lichtquelle außerdem geeignete optische Mittel z.B. in Form einer oder mehrerer Linsen und/oder Prismen umfassen, auf die hier nicht näher eingegangen werden soll, da die Erzeugung von Licht- bzw. Laserlinien an sich grundsätzlich bekannt ist. Erwähnt sei noch die Möglichkeit, eine Lichtlinie dadurch zu erzeugen, dass ein Lichtstrahl z.B. eines Lasers mittels einer bewegliche Ablenkeinheit, insbesondere eines Drehspiegels, ausreichend schnell abgelenkt wird, so dass der sich schnell bewegende Lichtpunkt oder -fleck als Linie wahrgenommen werden kann. Auch auf diese Weise erzeugtes Licht ist im Rahmen dieser Offenbarung als ein sich aufweitender Lichtstrahl anzusehen.

Die Bestimmung der Querschnittsprofile kann in der Praxis dazu dienen, die jeweilige Querschnittsfläche des Produkts zu bestimmen. Hierauf wird nachstehend näher eingegangen. Dies ist jedoch nicht zwingend. Grundsätzlich können die mit der Abtasteinrichtung bestimmten Querschnittsprofile auch zu anderen Zwecken genutzt werden. Es ist ferner nicht zwingend, dass die Abtasteinrichtung eine "Rundum"-Abtastung durchführt, d.h. ein 360°-Profil bestimmt. So ist es beispielsweise auch möglich, das Querschnittsprofil lediglich der Oberseite oder der Unterseite des Produkts zu bestimmen.

Wie nachstehend noch näher ausgeführt wird, sind Schneidevorrichtungen der eingangs genannten Art, die auch einfach als Slicer bezeichnet werden, grundsätzlich bekannt. Beispielsweise mit planetenartig umlaufenden und zusätzlich rotierenden Kreismessern oder mit lediglich rotierenden Sichelmessern, die Drehzahlen von mehreren 100 bis einige 1.000 Umdrehungen pro Minute aufweisen, werden bei konstanter Schneidfrequenz von Lebensmittelprodukten Scheiben abgetrennt. In der Praxis kommt es darauf an, dass entweder die einzelnen Scheiben oder aus einer Mehrzahl von Scheiben gebildete Portionen ein vorgegebenes Gewicht aufweisen. Vorzugsweise wird, da die Schneidfrequenz konstant ist, auf das Gewicht der einzelnen Scheiben dadurch Einfluss genommen, dass die Dicke der Scheiben variiert wird, und dies erfolgt durch eine entsprechende Steuerung der Produktzuführung: je weiter das Produkt zwischen zwei aufeinander folgenden Schnitten des Messers über die Schneidebene hinaus vorgeschoben wird, desto größer ist die Dicke der anschließend abgetrennten Produktscheibe. Die Scheibendicke ist nur ein Parameter, der das Gewicht der betreffenden Scheibe bestimmt. Das Scheibengewicht ist durch das Scheibenvolumen und die durchschnittliche Dichte der Scheibe bestimmt, wobei sich das Scheibenvolumen aus der Scheibendicke und der Außenflächenkontur der Scheibe ergibt.

Aus der WO 99/06796 A1 ist eine Vorrichtung zum Aufschneiden eines Lebensmittelprodukts, z.B. eines Fleischprodukts, in einzelne Scheiben von vorgebbarem Gewicht bekannt (Seite 1, Abs. 2; Seite 16, Zeilen 1-6).

Dabei soll die Ausbeute des Produkts beim Aufschneiden maximiert und der Verlust bzw. Abfall minimiert werden (Seite 1, Zeilen 12-14).

Das jeweilige Lebensmittelprodukt, das ein unregelmäßiges Oberflächenprofil aufweist, wird auf einem Transportband zur Gewichtsbestimmung über eine Wiegestation und zur Ermittlung seines Oberflächenprofils durch eine Abtasteinrichtung geführt, wobei in der Abtasteinrichtung in vorgebbaren Abständen jeweils die Umfangskontur quer zur Transportrichtung erfasst wird. Die Signale der Abtasteinrichtung werden einer Mikroprozessor-Steuereinheit zugeführt, welche die Querschnittsfläche und die Querschnittskonturen an den vorgegebenen Intervallen berechnet und speichert (Seite 12, Zeilen 2-18).

Aus den gespeicherten Werten wird das Volumen berechnet und es wird durch Division des Gesamtgewichts durch das Volumen die Dichte des Lebensmittelprodukts bestimmt (Seite 15, Zeilen 25-32).

Volumen, Gewicht, Dichte und die dreidimensionale Umfangskontur des Lebensmittelprodukts werden in einem Speicher der Mikroprozessor-Steuereinheit gespeichert und können dann aus dem Mikroprozessor einer Verarbeitungsvorrichtung für das Lebensmittelprodukt zugeführt werden. So können beispielsweise die gespeicherten Daten für jedes Lebensmittel bzw. Fleischprodukt einer Aufschneidevorrichtung zugeführt werden, so dass das Fleischprodukt in Scheiben vorgegebenen Gewichts aufgeschnitten werden kann, wobei die Schneidevorrichtung aus den gespeicherten Daten die Dicke einer jeden Scheibe bestimmen kann, um Scheiben von vorgegebenem Gewicht zu erhalten (Seite 15, Zeile 33 bis Seite 16, Zeile 6).

Die Abtasteinrichtung zur Bestimmung der Umfangskontur des jeweiligen Produkts besteht dabei vorzugsweise aus einem oder mehreren um das Produkt verschwenkbaren Ultraschall-Abtastköpfen. Alternativ wird die Verwendung von Laserscannern oder anderer geeigneter Scanner vorgeschlagen (Seite 17, Zeilen 10-13).

Vergleichbare Vorrichtungen und Verfahren sind auch in WO 99/47885 A2 sowie DE 198 20 058 A1 beschrieben.

Aus der DE 196 04 254 A1 sind ein Verfahren und eine Vorrichtung zur Gewinnung gewichtskonstanter Portionen oder Scheiben aus aufgeschnittenen Lebensmittelprodukten von unregelmäßiger Form bekannt, wobei ebenso wie im Falle der WO 99/06796 A1 die Gutausbeute beim Aufschneiden gesteigert werden soll (Seite 1, Zeilen 24 und 25).

Dazu wird wiederum die Außenflächenkontur des jeweiligen Lebensmittelprodukts vor dem Aufschneiden ermittelt und aus der Außenflächenkontur unmittelbar die Masse eines von dieser Außenflächenkontur eingefassten Produktstücks errechnet. Durch entsprechende Veränderung des Vorschubs beim Aufschneiden kann die Scheibendicke in Abhängigkeit von der Außenkontur so eingestellt werden, dass die Scheibenmassen bzw. die Scheibengewichte einer Portion weniger stark differieren (Seite 1, Zeilen 40-42, Seite 1, Zeilen 67 bis Seite 2, Zeile 1).

Zur Erfassung der gesamten Außenflächenkontur sind in einem Abtastgerät in diesem Falle mehrere Linienprojektions-Laser und mehrere zugeordnete Aufnahmeeinrichtungen in Form von Kameras, die unter einem definierten Winkel zum Laser angeordnet sind, vorgesehen (Seite 3, Zeilen 37-41; Seite 4, Zeilen 56-61). Die jeweilige Kamera beobachtet dabei den Verlauf der projizierten Laserlinie und ein mit den Kameras verbundener Rechner berechnet aus den erhaltenen Signalen die Querschnittsfläche einer potentiellen Produktscheibe (Seite 3, Zeilen 49-54). Das Abtastgerät arbeitet folglich nach dem sogenannten Lichtschnittverfahren.

In Abhängigkeit von der Größe der jeweiligen Querschnittsfläche wird über das Steuersystem der Aufschneidevorrichtung die Scheibenstärke variiert.

Aus der EP 1 178 878 B1, die auf die WO 00/62983 A1 zurückgeht, ist ein automatisches System zum Bearbeiten eines Produkts auf der Basis der Erfassung seines Oberflächenprofils mit einem Fließband bekannt, auf dem das Produkt der Reihe nach zwischen einem Abtastgerät und einer Produkt-Bearbeitungseinrichtung entlang geführt wird, wobei das Abtastgerät Zeilenlaser über und unter dem Produkt zum Ausleuchten des Oberflächenprofils des Produkts und Kameras zum Abbilden des von den Zeilen-Lasern ausgewiesenen Oberflächenprofils hat. Dabei ist jeder Zeilenlaser angepasst, das Oberflächenprofil des Produkts über eine Ebene quer zur Beförderungsrichtung des Produkts auszuleuchten, und es ist eine Steuereinrichtung mit den Kameras verbunden, um durch Erfassen und Verarbeiten mehrerer visueller Bilder, die von den Kameras entlang der Länge des Produkts während des Durchgangs des Produkts durch das Abtastgerät erfasst werden, das Volumen des Produkts zu bestimmen, wobei die Steuereinrichtung so angeordnet ist, dass sie die Verarbeitung dieser visuellen Bilder durchgeführt hat, bevor das Produkt in der Produkt-Bearbeitungseinrichtung bearbeitet wird und die Produkt-Bearbeitungseinrichtung ein Steuersystem hat, um ihre Bearbeitungsvorgänge an dem Produkt teilweise auf der Basis des Volumens des Produkts zu variieren.

Dieses System unterscheidet sich von der Vorrichtung gemäß WO 99/06796 A1 dadurch, dass anstelle einer Abtastanordnung mit bewegten Sensoren, die zur Abstandsmessung ausgebildet sind, eine Abtastanordnung mit Linienprojektions- oder Zeilenlasern mit zugeordneten Kameras verwendet wird, wie sie zum gleichen Zweck aus der DE 196 04 254 A1 bekannt ist.

Soweit die tatsächliche Vorgehensweise bei der Nutzung der ermittelten Kontur- oder Profildaten überhaupt erwähnt wird, ist den bekannten Vorrichtungen gemeinsam, dass aus den Kontur- oder Profildaten zunächst das Gesamtvolumen des Produktes und aus diesem - unter Verwendung des ebenfalls gemessenen Produktgesamtgewichts - die durchschnittliche Produktdichte berechnet wird.

Der vorstehend erläuterte Gedanke, die gemessenen Querschnittsprofile unter anderem dazu zu verwenden, das Volumen des jeweils abgetasteten Produkts zu bestimmen, indem aus den Profildaten jeweils die entsprechende Querschnittsfläche des Produkts bestimmt wird, stellt nur eine Möglichkeit dar, die Profildaten zu nutzen. Die Bestimmung des Produktvolumens aus den Profildaten ist nicht zwingend. Hierzu wird beispielsweise auf die am 7. August 2009 eingereichte, noch nicht veröffentlichte deutsche Patentanmeldung 10 2009 036 682 der Anmelderin verwiesen, die eine technische Lehre beschreibt, wonach zwar aus den Profildaten die Querschnittsflächen bestimmt werden, die Querschnittsflächen jedoch nicht zur Volumenberechnung verwendet werden. Die Bestimmung von Querschnittsflächen aus den Profildaten ist für sich genommen ebenfalls nicht zwingend. So ist es beispielsweise möglich, die Produktdichte auf andere Art und Weise zu bestimmen oder einen vorgegebenen Wert für die Produktdichte zu verwenden. Die Profilinformationen können in diesem Fall ausschließlich dazu verwendet werden, während des Aufschneidevorgangs das Produkt in der jeweils gewünschten Art und Weise zuzuführen.

Anstelle des Begriffs "Profil" wird auch der Begriff "Kontur" verwendet. Im Rahmen der vorliegenden Offenbarung sollen diese Begriffe das gleiche bedeuten.

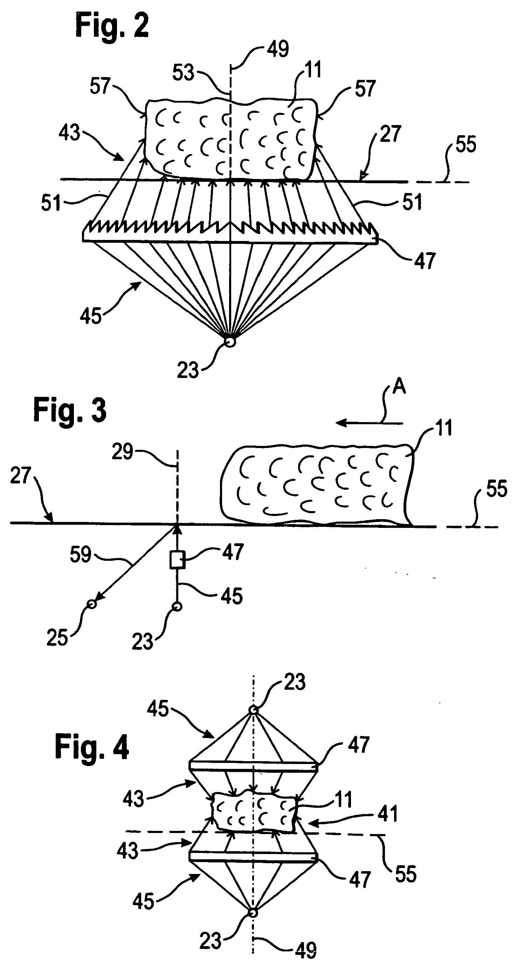

EP 2 101 144 A1 offenbart eine Prüfeinrichtung, bei der eine optisch wirksame Einrichtung in Form einer Zylinderlinse 21 vorgesehen ist (vgl. Fig. 2; Absatz [0022]).

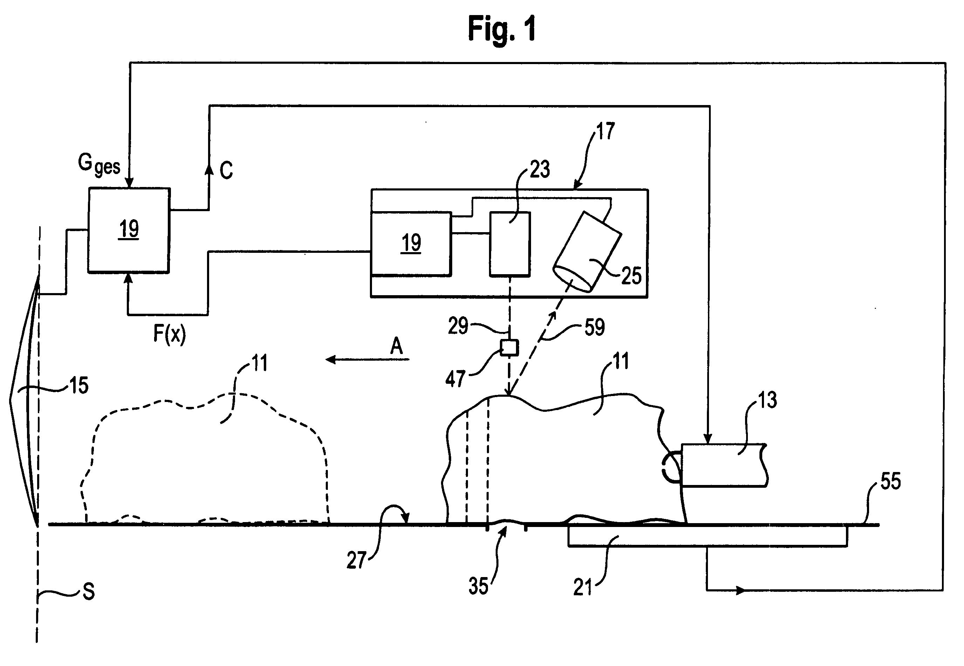

JP 58 143204 A offenbart eine Vorrichtung zur Erfassung einer Oberfläche, welche runde Zylinderlinsen 2 aufweist, die eine optisch wirksame Einrichtung bilden (vgl. Fig. 1).

US 2007/0090189 A1 erwähnt eine Kombination aus Fresnel- und Zylinderlinse. Wie in den Absätzen [0121] bis [0123] beschrieben ist, wird diese Kombination aus Fresnel- und Zylinderlinse dazu verwendet, das Licht so zu fokussieren, dass sich eine in einer Haupt-Scan-Richtung erstreckende Linie ergibt.

US 5,555,090 A offenbart eine Vorrichtung zur Bestimmung der Höhe von Objekten, beispielsweise Paketen. Ein Lichtstrahl wird mit Hilfe einer Fresnellinse parallelisiert und über einen Strahlteiler auf das Objekt gelenkt (siehe Fig. 4 sowie Spalte 4, Z. 25 ff.). Zwischen der Fresnellinse 130 und dem Strahlteiler 150 passiert der Lichtstrahl ein Gitternetz 140. Auf dem Objekt 10 wird folglich ein Gitternetz abgebildet, welches eine vorbestimmte Größe aufweist. Das Muster ändert sich in Abhängigkeit von der Größe der vermessenen Objekte 10. Diese Veränderungen werden mit Hilfe eines Sensors 160, bei dem es sich beispielsweise um eine Linearkamera handeln kann, bestimmt. Gemäß Spalte 5, Z. 4 f. befindet sich der Strahlteiler 150 in einer Linie mit dem Sensor 160. Der Sensor blickt somit gewissermaßen direkt von oben auf das erzeugte Muster.

In der Praxis kommt es darauf an, die Lichtlinie über die gesamte Ausdehnung der jeweils abzutastenden Produktoberfläche mit ausreichender Intensität und Schärfe zu erzeugen, damit in den mittels der Nachweiseinrichtung aufgenommenen Bildern eine Auswertung des betreffenden Teils des Oberflächenprofils überhaupt oder zumindest mit einer hinreichenden Genauigkeit möglich ist. Handelt es sich bei dem abzutastenden Produkt beispielsweise um einen exakt quaderförmigen Gegenstand, der mit einer seiner Flachseiten der Lichtquelle zugewandt ist, so lässt sich eine den Anforderungen genügende Lichtlinie über die gesamte Breite der betreffenden Produktseite problemlos erzeugen.

Reale aufzuschneidende Lebensmittelprodukte sind allerdings nicht exakt quaderförmig, sondern weisen eine mehr oder weniger unregelmäßige Oberflächenkontur auf. Insbesondere besitzen die Produkte keine ausgeprägten Kanten, so dass - im Querschnitt betrachtet - abgerundete Randbereiche vorhanden sind. Wenn beispielsweise die Lichtquelle mittig unterhalb eines solchen abzutastenden Produkts angeordnet ist, dann kann zwar in einem mittleren Bereich der Produktunterseite eine mit ausreichender Genauigkeit auswertbare Lichtlinie erzeugt werden. In den abgerundeten Randbereichen dagegen genügt die Lichtlinie nicht mehr den erläuterten Anforderungen.

Wie bereits vorstehend bei der Diskussion des Standes der Technik erwähnt, kann man sich in einer solchen Situation damit behelfen, mehrere Lichtquellen um das Produkt herum anzuordnen, die jeweils eine Lichtlinie auf dem Produkt erzeugen. Sind sowohl unterhalb, oberhalb als auch seitlich des Produkts Lichtquellen angeordnet, so kann auf diese Weise insgesamt eine um das gesamte Produkt herumlaufende Lichtlinie auf der Produktoberfläche erzeugt werden, die mit einer geeigneten Anzahl von geeignet angeordneten Nachweiseinrichtungen ausgewertet werden kann, wobei z.B. jeder Lichtquelle eine eigene Nachweiseinrichtung zugeordnet ist. Die Lichtlinien werden sich hierbei in der Regel überlappen, was grundsätzlich unproblematisch ist, da eine solche Überlappung eine eher vorteilhafte Intensitätserhöhung mit sich bringt.

Diese Vorgehensweise, also der Einsatz einer Mehrzahl von in Umfangsrichtung um das abzutastende Produkt herum verteilt angeordneten Lichtquellen, ist aber insofern von Nachteil, als eine exakte Ausrichtung der Lichtquellen erforderlich ist, damit sichergestellt ist, dass sich die einzelnen Lichtlinien der Lichtquellen auch tatsächlich nur zu einer einzigen Lichtlinie auf der Produktoberfläche zusammenfügen. Ein Versatz der Lichtlinien auf der Produktoberfläche quer zur Abtastebene würde nämlich dazu führen, dass zumindest eine Nachweiseinrichtung wenigstens abschnittsweise zwei getrennte Lichtlinien auf der Produktoberfläche detektiert, was eine eindeutige Bestimmung des Querschnittsprofils unmöglich macht oder zumindest die Auswertung erheblich erschwert.

Aufgabe der Erfindung ist es daher, eine Abtasteinrichtung der eingangs genannten Art zu schaffen, mit der auf möglichst einfache Weise und mit möglichst geringem Aufwand auf der Produktoberfläche eine Lichtlinie erzeugt werden kann, die den Anforderungen insbesondere hinsichtlich Intensität und Schärfe über einen möglichst großen und insbesondere einen unregelmäßigen Verlauf aufweisenden Bereich der Produktoberfläche genügt.

Die Lösung dieser Aufgabe erfolgt durch die Merkmale des Anspruchs 1.

Erfindungsgemäß ist insbesondere vorgesehen, dass im Ausbreitungsweg des sich aufweitenden Lichtstrahls eine optisch wirksame Einrichtung angeordnet ist, die dazu ausgebildet ist, der Divergenz zumindest eines Teils des einfallenden Lichts entgegenzuwirken. Die optisch wirksame Einrichtung umfasst wenigstens eine Fresnellinse, die in der Abtastebene wirksam ist und der Aufweitung des Lichtstrahls in der Abtastebene entgegenwirkt.

Indem erfindungsgemäß der Divergenz des Lichts entgegengewirkt wird, kann die Linienerzeugung verbessert werden. Insbesondere kann erreicht werden, dass durch eine Beeinflussung der geradlinigen Lichtausbreitung die Richtungen, aus denen das Licht auf die Produktoberfläche auftrifft, sich gegenüber einer ausschließlich geradlinigen Lichtausbreitung verändern.

Was den Effekt der optisch wirksamen Einrichtung anbetrifft, so geht diese bereits von einer Lichtquelle aus, die einen Lichtstrahl erzeugt, der sich in Richtung eines Abtastbereiches für das Produkt in einer Abtastebene ausbreitet und sich dabei aufweitet. Die optisch wirksame Einrichtung dient dazu, dieser Aufweitung des Lichtstrahls entgegen zu wirken. Mit anderen Worten erzeugt die optisch wirksame Einrichtung die Abtastebene nicht, sondern ist in der Abtastebene wirksam.

Die erfindungsgemäße optisch wirksame Einrichtung kann so ausgebildet sein, dass die Divergenz des Lichts verringert wird, dass paralleles Licht erzeugt wird oder dass konvergentes Licht erzeugt wird. Hierdurch kann erreicht werden, dass derjenige Teil des Lichts, der sich ohne die optisch wirksame Einrichtung ungenutzt an dem Produkt vorbei ausbreiten würde, derart beeinflusst wird, dass dieses Licht auf die Produktoberfläche trifft und somit zur Linienerzeugung beiträgt. Durch eine Richtungsänderung dieses Lichts lassen sich außerdem Bereiche der Produktoberfläche beleuchten, d.h. kann eine Lichtlinie auf Bereiche der Produktoberfläche projiziert werden, die ohne optisch wirksame Einrichtung nicht oder nur unzureichend von der Lichtquelle beaufschlagt werden würden.

Ein Aspekt der Erfindung besteht also darin, mit der optisch wirksamen Einrichtung dafür zu sorgen, ansonsten ungenutztes Licht zur Linienerzeugung zu nutzen, wobei ein anderer Aspekt der Erfindung darin besteht, mit der optisch wirksamen Einrichtung auf ansonsten nicht oder unzureichend beleuchtete Bereiche der Produktoberfläche eine Lichtlinie zu projizieren.

Je nach konkreter Ausgestaltung der Beleuchtungseinrichtung und relativer Anordnung von Lichtquelle, optisch wirksamer Einrichtung und abzutastender Produktoberfläche kann insbesondere erreicht werden, dass abgerundete Randbereiche des Produkts mit durch die optisch wirksame Einrichtung beeinflusstem Licht beaufschlagt werden, so dass eine Lichtlinie auf diese bislang kritischen Bereiche der Produktoberfläche projiziert werden kann, ohne dass hierzu zusätzliche Lichtquellen erforderlich wären.

Erfindungsgemäß kann also mit nur einer einzigen Lichtquelle auch bei ungünstiger Produktkontur und insbesondere auf abgerundeten Randbereichen eine den Anforderungen an die Profilbestimmung genügende Lichtlinie erzeugt werden, was bislang nur mit Hilfe mehrerer in Umfangsrichtung verteilt angeordneter Lichtquellen möglich war. Da erfindungsgemäß nur eine einzige Lichtquelle erforderlich ist, entfällt eine problematische und insbesondere zeitaufwendige Ausrichtung mehrerer Lichtquellen, die erforderlich ist, um einen Versatz der Lichtlinien auf der Produktoberfläche zu vermeiden.

Wie eingangs bereits erwähnt, schließt die Erfindung nicht aus, dass für eine "Rundum"-Abtastung eines Produkts mehrere Lichtquellen, denen jeweils eine erfindungsgemäße optisch wirksame Einrichtung zugeordnet ist, vorgesehen werden. Die Anzahl der Lichtquellen, die zur Bestimmung eines solchen "360°-Profils" insgesamt benötigt werden, kann aber durch die Erfindung erheblich reduziert werden. In vielen praktischen Anwendungsfällen kann es nämlich ausreichen, nur oberhalb des Produkts und unterhalb des Produkts jeweils eine einzige Lichtquelle mit zugeordneter optisch wirksamer Einrichtung vorzusehen, um eine sich zumindest im Wesentlichen um das gesamte Produkt herum erstreckende Lichtlinie auf der Produktoberfläche zu erzeugen.

Bevorzugte Ausgestaltungen der Erfindung sind auch in den abhängigen Ansprüchen, der Beschreibung sowie der Zeichnung angegeben.

Wie vorstehend bereits erwähnt, kann die optisch wirksame Einrichtung dazu ausgebildet sein, paralleles oder konvergentes Licht zu erzeugen. Hierbei wird der Divergenz des einfallenden Lichts also insofern entgegengewirkt, als die Divergenz des Lichts nicht lediglich verringert, sondern das einfallende Licht derart beeinflusst wird, dass aus der optisch wirksamen Einrichtung paralleles Licht oder konvergentes Licht austritt.

In einem möglichen Ausführungsbeispiel umfasst die optisch wirksame Einrichtung wenigstens eine Linse oder zumindest ein Prisma. Grundsätzlich kann ein System aus einer Mehrzahl von Linsen und/oder Prismen vorgesehen sein.

Ein Vorteil von Fresnellinsen besteht darin, dass sich mit ihnen bei relativ geringer räumlicher Ausdehnung in Richtung der optischen Achse optische Wirkungen erzielen lassen, für die herkömmliche sphärische oder asphärische Linsen oder Linsensysteme einen sehr großen Bauraum in Richtung der optischen Achse erfordern würden. Insbesondere können Fresnellinsen in extremen Einbausituationen eine hohe Brechkraft bereitstellen.

Dass Fresnellinsen gegenüber herkömmlichen, "optisch äquivalenten" Linsen oder Linsensystemen unter Umständen schlechtere Abbildungseigenschaften aufweisen, kann in Anwendungen in Kauf genommen werden, bei denen es auf die Qualität oder Exaktheit der optischen Abbildung in erster Linie nicht ankommt.

Ein weiterer Vorteil der Fresnellinsen besteht darin, dass sie für den im Rahmen der Erfindung erforderlichen Zweck vergleichsweise einfach und kostengünstig herstellbar sind.

Eine erfindungsgemäße Fresnellinse kann beispielsweise aus Kunststoff hergestellt werden. Die Formgebung eines die Fresnellinse bildenden, anschließend weiter zu bearbeitenden Körpers kann beispielsweise durch Pressen oder durch Fräsen erfolgen.

Die Beleuchtungseinrichtung kann eine Mehrzahl von Lichtquellen umfassen, die jeweils einen sich in Richtung des Abtastbereichs in einer Abtastebene ausbreitenden und sich dabei aufweitenden Lichtstrahl erzeugen und um den Abtastbereich herum angeordnet sind. Auf diese Weise kann ein "360°-Profil" bestimmt werden. Dabei ist bevorzugt vorgesehen, dass die Abtastebenen der Lichtquellen zusammenfallen.

Jeder Lichtquelle kann eine der Divergenz zumindest eines Teils des einfallenden Lichts entgegen wirkende optisch wirksame Einrichtung zugeordnet sein. Ferner ist es möglich, aber nicht zwingend, jeder Lichtquelle eine Nachweiseinrichtung zuzuordnen.

In einem Ausführungsbeispiel ist die optisch wirksame Einrichtung bezüglich einer Mittelebene, die senkrecht zur Abtastebene verläuft und in der die Lichtquelle liegt, symmetrisch ausgebildet oder wirksam.

In einem weiteren Ausführungsbeispiel der Erfindung ist vorgesehen, dass die optisch wirksame Einrichtung konvergentes Licht erzeugt und sich jedes Paar von Einzelstrahlen, die unter dem gleichen Winkel zu einer Schnittlinie zwischen Abtastlinie und Mittelebene verlaufen, in einem Punkt kreuzt, der auf der Schnittlinie und hinter einer senkrecht zur Mittelebene verlaufenden Basisebene liegt. Diese Geometrie wird anhand eines Ausführungsbeispiels in Verbindung mit den Figuren näher erläutert.

Wenn die Basisebene durch eine Produktauflage definiert ist, auf der das abzutastende Produkt aufliegt, dann ist durch diese Geometrie gewährleistet, dass die - gedachten - Kreuzungspunkte der Lichtstrahlen entweder innerhalb des Produkts oder - von der Lichtquelle aus gesehen - hinter dem Produkt liegen. Hierdurch wird erreicht, dass kein Punkt auf der Oberfläche des Produkts aus mehr als einer Richtung beleuchtet wird.

Je nach Ausgestaltung der optisch wirksamen Einrichtung können sich alle Einzelstrahlen in einem einzigen gemeinsamen Punkt kreuzen. Alternativ variiert die Entfernung des auf der Schnittlinie liegenden Kreuzungspunkts von der Lichtquelle, und zwar in Abhängigkeit von dem Abstand des Ursprungs der Einzelstrahlen von der Schnittlinie. Insbesondere ist die Entfernung umso größer, je größer der Abstand ist.

Mit einer derartigen optisch wirksamen Einrichtung kann das einfallende divergente Licht noch effektiver zur Lichtlinienerzeugung genutzt werden.

In einem weiteren Ausführungsbeispiel ist vorgesehen, dass im Ausbreitungsweg des Lichtes zwischen der Produktoberfläche und der Nachweiseinrichtung wenigstens eine Umlenkeinrichtung für das Licht vorgesehen ist. Bei der Umlenkeinrichtung handelt es sich vorzugsweise um einen Spiegel, insbesondere um einen ebenen Spiegel. Hierbei ist es somit nicht erforderlich, die Nachweiseinrichtung, beispielsweise eine Kamera, so anzuordnen, dass diese direkt auf die auf der Produktoberfläche erzeugte Lichtlinie "blickt". Das Vorsehen wenigstens einer Umlenkeinrichtung ermöglicht es, die Nachweiseinrichtung an einem besonders geeigneten Ort anzuordnen, der insbesondere durch die baulichen Gegebenheiten einer übergeordneten Einrichtung, beispielsweise eines Hochgeschwindigkeitsslicers, gegeben ist, in welche die erfindungsgemäße Abtasteinrichtung integriert ist bzw. mit welcher die erfindungsgemäße Abtasteinrichtung zusammenwirkt.

Ferner wird vorgeschlagen, dass eine erste Nachweiseinrichtung für eine erste Seite des Produktes und eine zweite Nachweiseinrichtung für eine zweite Seite des Produktes in enger räumlicher Nähe zueinander, insbesondere unmittelbar nebeneinander, angeordnet sind, wobei vorzugsweise die Nachweiseinrichtungen entgegengesetzten Richtungen zugewandt sind.

Hierdurch wird es ermöglicht, beispielsweise zwei in entgegengesetzte Richtungen "blickende" Kameras praktisch am gleichen Ort anzuordnen. Dabei kann vorgesehen sein, mittels einer oder mehrerer Umlenkeinrichtungen dafür zu sorgen, dass die Kameras Licht von unterschiedlichen Bereichen der Produktoberfläche empfangen, insbesondere von einander gegenüberliegenden Produktseiten. So kann beispielsweise eine Kamera für die Oberseite des Produktes und die andere Kamera für die Unterseite des Produktes vorgesehen sein, obwohl beide Kameras praktisch an derselben Stelle angeordnet sind.

In einem Ausführungsbeispiel der erfindungsgemäßen Aufschneidevorrichtung ist die Produktzuführung dazu ausgebildet, das Produkt durch den Abtastbereich der Abtasteinrichtung zu führen. Die Abtasteinrichtung ist dabei insbesondere in die Aufschneidevorrichtung derart integriert, das ein aufzuschneidendes Produkt zunächst durch die Abtasteinrichtung gefördert und anschließend der Schneidebene der Aufschneidevorrichtung zugeführt wird. Dabei kann die Abtasteinrichtung derart weit vor der Schneidebene - in Produktzuführrichtung gesehen - angeordnet sein, dass vor Beginn des Aufschneidens des Produkts das Produkt vollständig abgetastet ist.

Wie vorstehend bereits erwähnt, kann eine Basisebene der Abtasteinrichtung durch eine Produktauflage der Aufschneidevorrichtung definiert sein, und zwar derart, dass alle Kreuzungspunkte der Einzelstrahlen, die das von der optisch wirksamen Einrichtung kommende konvergente Licht bilden, entweder innerhalb des auf der Produktauflage aufliegenden Produkts oder hinter dem Produkt liegen.

Es kann vorgesehen sein, dass eine erste Nachweiseinrichtung für eine erste Seite des Produktes und eine zweite Nachweiseinrichtung für eine zweite Seite des Produktes in enger räumlicher Nähe zueinander, insbesondere unmittelbar nebeneinander, an einer Stelle angeordnet sind, die hinter - in Produktzuführrichtung gesehen - der Abtastebene und/oder unterhalb einer durch eine Produktauflage definierten Ebene gelegen ist.

Es ist möglich, aber nicht zwingend, dass die optisch wirksame Einrichtung das gesamte von der Lichtquelle stammende Licht beeinflusst. Alternativ kann vorgesehen sein, dass sich ein Teil des Lichts von der optisch wirksamen Einrichtung unbeeinflusst von der Lichtquelle zum Produkt ausbreitet.

Die Erfindung ist nicht auf die Profilbestimmung an aufzuschneidenden Lebensmittelprodukten beschränkt, sondern umfasst die Bestimmung von Profilen und/oder Messung von Querschnittsflächen beliebiger Gegenstände.

Die Erfindung wird im Folgenden beispielhaft unter Bezugnahme auf die Zeichnung beschrieben. Es zeigen:
- Fig. 1: schematisch eine mögliche Ausgestaltung einer erfindungsgemäßen Aufschneidevorrichtung mit einer erfindungsgemäßen Abtasteinrichtung,
- Fig. 2: eine schematische Ansicht einer erfindungsgemäßen Abtasteinrichtung in einer Ebene senkrecht zu einer Produktzuführrichtung,
- Fig. 3: schematisch eine Seitenansicht einer erfindungsgemäßen Abtasteinrichtung,
- Fig. 4: schematisch eine weitere Ansicht einer erfindungsgemäßen Abtasteinrichtung in einer Ebene senkrecht zu einer Produktzuführrichtung, wobei zwei Beleuchtungseinrichtungen vorgesehen sind,
- Fig. 5: eine weitere schematische Ansicht einer erfindungsgemäßen Abtasteinrichtung in einer Ebene senkrecht zu einer Produktzuführrichtung,
- Fig. 6: eine weitere schematische Ansicht einer erfindungsgemäßen Abtasteinrichtung in einer Ebene senkrecht zu einer Produktzuführrichtung mit oberhalb des Produkts angeordneten Beleuchtungseinrichtungen, und
- Fig. 7: schematisch eine weitere Seitenansicht einer erfindungsgemäßen Abtasteinrichtung.

In Fig. 1 ist schematisch eine mögliche Ausführungsform einer erfindungsgemäßen, im Folgenden einfach als Slicer bezeichneten Aufschneidevorrichtung gezeigt, die eine erfindungsgemäße Abtasteinrichtung 17 umfasst.

Der Slicer umfasst eine Produktzuführung 13, die hier in Form einer am hinteren Ende des aufzuschneidenden Produkts 11 eingreifenden Halte- oder Greifeinrichtung vorgesehen ist, welche mittels eines nicht dargestellten Antriebs in einer Produktzuführrichtung A bewegbar ist, um das Produkt 11 einer senkrecht zur Produktzuführrichtung A verlaufenden Schneidebene S zuzuführen. In dieser Schneidebene S bewegt sich ein Schneidmesser 15, bei dem es sich beispielsweise um ein planetarisch umlaufendes und rotierendes Kreismesser oder um ein lediglich eine Eigenrotation ausführendes Sichelmesser handeln kann. Die aufzuschneidenden Produkte 11 liegen auf einer Produktauflage 27 auf, die sich parallel zur Produktzuführrichtung A erstreckt und eine Basisebene 55 definiert, auf die nachstehend näher eingegangen wird. Zusätzlich zu dem Produkthalter 13 können weitere Antriebseinrichtungen für die Produkte 11 vorgesehen sein, die hier nicht dargestellt sind.

In einem ausreichenden Abstand vor der Schneidebene S ist eine hier nur schematisch dargestellte Abtasteinrichtung 17 angeordnet, die im Folgenden auch einfach als Scanner bezeichnet wird. Der Scanner 17 dient dazu, in einer in diesem Ausführungsbeispiel bezüglich der Schneidebene S feststehenden Abtastebene 29, die ebenfalls senkrecht zur Produktzuführrichtung A verläuft, eine Mehrzahl von Querschnittsflächen eines aufzuschneidenden, vor dem Aufschneiden durch den Scanner 17 laufenden Produkts 11 zu bestimmen. Mit gestrichelten Linien ist in Fig. 1 lediglich zur Veranschaulichung ein bereits abgetastetes Produkt dargestellt, an dem das Aufschneiden aber noch nicht begonnen hat.

In dem hier dargestellten Ausführungsbeispiel arbeitet der Scanner 17 nach dem Lichtschnittverfahren und ist hierzu mit einer oder mehreren Lichtquellen 23, beispielsweise so genannten Zeilenlasern, sowie einer oder mehreren Kameras 25 versehen. Im Ausbreitungsweg der Laserstrahlung zwischen Lichtquelle 23 und Produkt 11 ist eine optisch wirksame Einrichtung 47 angeordnet, die nachstehend näher erläutert wird.

In Fig. 1 ist lediglich eine oberhalb des Produkts 11 angeordnete Abtasteinheit dargestellt. Der Scanner 17 kann alternativ oder zusätzlich eine unterhalb des Produkts 11 angeordnete Abtasteinheit aufweisen, wobei geeignete Mittel dafür vorgesehen sind, ein Abtasten der Unterseite des Produkts 11 zu ermöglichen, beispielsweise eine an der Abtastebene 29 vorgesehene Lücke 35 zwischen zwei aufeinander folgenden, die Produktauflage 27 zumindest im Bereich der Abtastebene 29 bildenden Endlosförderbändern.

Grundsätzlich kann der Scanner 17 eine beliebige Anzahl von in der Abtastebene 29 um das Produkt 11 herum angeordneten Abtasteinheiten aufweisen, um das Produkt 11 "rundherum" abtasten und somit "360°-Profile" bzw. die jeweiligen Querschnittsflächen mit hoher Genauigkeit bestimmen zu können.

Das grundsätzlich bekannte Lichtschnittverfahren beruht auf dem Prinzip, auf die jeweils zu untersuchende Oberfläche - hier die Oberfläche der aufzuschneidenden Produkte 11 - eine Lichtlinie zu projizieren und diese Lichtlinie mit einer geeigneten Nachweiseinrichtung zu detektieren. Aufgrund der bekannten geometrischen Verhältnisse kann durch Verarbeitung von mit der Nachweiseinrichtung aufgenommenen Bildern die Kontur oder das Profil der Oberfläche längs der Lichtlinie bestimmt werden. Ist die Oberflächenkontur in einer Ebene um den gesamten Gegenstand herum auf diese Weise bestimmt worden, kann mittels des Lichtschnittverfahrens beispielsweise die Querschnittsfläche des Gegenstands in dieser Ebene berechnet werden. Da Lichtschnittverfahren insbesondere aus dem eingangs bereits genannten Stand der Technik auch in Verbindung mit dem Aufschneiden von Lebensmittelprodukten bekannt sind, wird hierauf nicht näher eingegangen.

Der Slicer umfasst gemäß dem Ausführungsbeispiel der Fig. 1 außerdem eine Steuer- und Recheneinrichtung 19, die hier zwei Einheiten umfasst, von denen eine im Scanner 17 und die andere an einer anderen Stelle angeordnet ist, insbesondere in einer zum Betreiben des Slicers und insbesondere der Produktzuführung 13 vorgesehenen Steuerung. Diese beiden Einheiten können alternativ auch zu einer einzigen Einheit zusammengefasst sein. Im dargestellten Ausführungsbeispiel werden die unmittelbar am Produkt 11 gemessenen Querschnittsflächen F(x) der Slicer-Einheit 19 zugeführt, die außerdem das Gesamtgewicht Gges des Produkts 11 empfängt, das mittels einer Waage 21 gemessen wird. Die Waage 21 kann ein Bestandteil des Scanners 17, grundsätzlich aber auch an einer anderen Stelle des Slicers oder vor dem Slicer angeordnet sein.

Bei den gemessenen, an die Slicer-Einheit 19 übermittelten Querschnittsflächen F(x) handelt es sich um einen Satz von Querschnittsflächen, die in konstanten Abständen längs der Produktzuführrichtung A am Produkt 11 gemessen werden. Dies kann beispielsweise dadurch erreicht werden, dass das Produkt 11 mit einer konstanten Geschwindigkeit durch den Scanner 17 bewegt und der Scanner 17 mit einer konstanten Aufnahmefrequenz betrieben wird. Der konstante Abstand zwischen zwei unmittelbar aufeinander folgenden gemessenen Querschnittsflächen F(x) beträgt beispielsweise 5 mm. Durch Verändern der Produktzuführgeschwindigkeit und/oder der Abtastfrequenz des Scanners 17 kann dieser konstante Abstand, der auch als Scan- oder Schrittweite bezeichnet wird, verändert werden, um auf diese Weise die Genauigkeit oder Auflösung zu ändern, mit welcher das Produkt 11 abgetastet und hinsichtlich seiner Außenflächenkontur bzw. seines Profils vermessen wird.

Die Steuer- und Recheneinheit 19 berechnet aus den Querschnittsflächen des Produkts 11 und dessen Gesamtgewicht Gges Steuerdaten C, um auf diese Weise beim Aufschneiden des Produkts 11 in der eingangs erläuterten Art und Weise die Scheibendicke und damit das Scheibengewicht in der jeweils gewünschten Weise zu variieren, insbesondere mit dem Ziel, gewichtskonstante Scheiben oder gewichtskonstante Scheibenportionen vom Produkt 11 abzutrennen.

Die Berechnung der Steuerdaten C kann vollständig oder teilweise in einer der beiden Recheneinheiten 19 erfolgen, d.h. ganz oder teilweise entweder im Scanner 17 oder ganz oder teilweise am Slicer, d.h. z.B. in der Slicer-Steuerung. Dies steht im Belieben des Benutzers.

Die Art und Weise der Nutzung der Querschnittsflächen des Produkts und des Produktgesamtgewichts zum Bestimmen der Steuerdaten C, insbesondere zur Erstellung einer Gewichtstabelle, mit der dann beim Aufschneiden oder zum Erstellen eines Aufschneidplans gearbeitet werden kann, ist nicht Gegenstand der Erfindung, so dass hierauf nicht näher eingegangen wird.

Die Fig. 2 bis 4 zeigen schematisch mögliche Ausgestaltungen der Abtasteinrichtung 17 insbesondere in Bezug auf die Art und Weise der Erzeugung der Lichtlinie auf der Produktoberfläche.

In Fig. 2 ist beispielhaft eine Anordnung dargestellt, in der lediglich eine einzige Lichtquelle 23, beispielsweise ein Zeilenlaser, unterhalb des Produkts 11 angeordnet ist, welches auf einer Produktauflage 27 aufliegt, die eine Basisebene 55 definiert.

Die Lichtquelle 23 sendet einen sich aufweitenden, divergenten Lichtstrahl 45 in Richtung der Unterseite des Produkts 11 aus, und zwar (vgl. Fig. 3) in einer Abtastebene 29, die in diesem Ausführungsbeispiel senkrecht zur Basisebene 55 und damit zu einer Produktzuführrichtung A verläuft. Diese Ausrichtung der Abtastebene 29 ist jedoch nicht zwingend. Grundsätzlich kann die Abtastebene 29 unter einem beliebigen Winkel zur Basisebene 55 geneigt verlaufen.

Die Erzeugung des sich aufweitenden Lichtstrahls 45 durch die Lichtquelle 23 kann dadurch erfolgen, dass die Lichtquelle 23 - hier nicht dargestellte - optische Mittel umfasst, beispielsweise eine Zylinderlinse, die einer Laserdiode vorgelagert ist.

Im Ausbreitungsweg des von der Lichtquelle 23 kommenden divergenten Lichts 45 ist eine optisch wirksame Einrichtung 47 angeordnet, die als Fresnellinse ausgebildet ist. Die Fresnellinse 47 besitzt eine stabförmige Grundform mit einer relativ geringen Ausdehnung sowohl senkrecht zur Abtastebene 29 (vgl. Fig. 3) als auch senkrecht zur Basisebene 55.

Die Breite der Fresnellinse 47, d.h. deren Ausdehnung senkrecht zu einer Mittelebene 49, auf die nachstehend näher eingegangen wird, ist dagegen derart groß gewählt, dass diese größer ist als die Breite des abzutastenden Produkts 11. In der Praxis sind Scanner und Slicer in der Regel derart ausgelegt, dass Produkte 11 unterschiedlicher Breite abgetastet und aufgeschnitten werden können. Die Breite der Fresnellinse 47 ist vorzugsweise derart gewählt, dass sie größer ist als die maximale Produktbreite, für welche Scanner und Slicer ausgelegt sind.

Die Fresnellinse 47 ist derart ausgebildet, dass sie der Divergenz des sich von der Lichtquelle 23 zur Fresnellinse 47 ausbreitenden Lichts 45 derart entgegenwirkt, dass das einfallende divergente Licht die Fresnellinse 47 als konvergentes Licht 43 verlässt. Lediglich zur Veranschaulichung sind einige Einzelstrahlen 51 des konvergenten Lichts 43 in Fig. 1 rein schematisch dargestellt.

Aus der Darstellung der Fig. 2 ist zu ersehen, dass sich ein Teil des von der Lichtquelle 23 stammenden divergenten Lichts 45 ohne Fresnellinse 47 geradlinig an dem Produkt 11 vorbei ausbreiten würde. Eine Wirkung der erfindungsgemäßen optisch wirksamen Einrichtung, hier der Fresnellinse 47, besteht darin, dieses ansonsten ungenutzte Licht in seiner Ausbreitung derart zu beeinflussen, dass es auf die Produktoberfläche gelenkt wird. Hierdurch können insbesondere abgerundete Randbereiche des Produkts 11 und sogar zumindest Teile der Produktseiten oder -flanken 57 derart beleuchtet werden, dass auch dort eine ausreichend scharfe und intensive Lichtlinie erzeugt wird.

Die erfindungsgemäße optisch wirksame Einrichtung 47 hat hier folglich den Effekt, dass insbesondere die äußeren Bereiche des divergenten Lichtstrahls 45 nach innen, also in Richtung einer Mittelebene 49 umgelenkt werden, die senkrecht zur Basisebene 55 verläuft und in der die Lichtquelle 23 liegt.

Die Fresnellinse 47 gemäß Fig. 2 ist dabei derart ausgebildet, dass sich die Einzelstrahlen 51 des konvergenten Lichts 43 nicht vor der Produktoberfläche kreuzen, sondern entweder innerhalb des Produkts 11 odervon der Lichtquelle 23 aus gesehen - hinter dem Produkt 11.

Die Basisebene 45 und die Mittelebene 49 schneiden sich längs einer Linie 53, auf der sich die Einzelstrahlen 51 des konvergenten Lichts 43 kreuzen. Wenn sich die Einzelstrahlen 51 nicht alle in einem gemeinsamen Punkt auf der Schnittlinie 53 kreuzen, dann ist insbesondere die Entfernung des Kreuzungspunkts von der Lichtquelle 23 von dem Abstand des Ursprungs der betreffenden Einzelstrahlen 51 an der Fresnellinse 47 von der Schnittlinie 53 abhängig. Mit anderen Worten liegt der Kreuzungspunkt umso weiter von der Lichtquelle 23 entfernt auf der Schnittlinie 53, je weiter außen die betreffenden Einzelstrahlen 51 die Fresnellinse 47 durchqueren.

Während in dem Ausführungsbeispiel der Fig. 2 die Fresnellinse 47 konvergentes Licht 43 erzeugt, lässt sich eine wesentliche Verbesserung gegenüber bekannten Anordnungen, die keine erfindungsgemäße optisch wirksame Einrichtung zwischen Lichtquelle und Produktoberfläche aufweisen, auch dann erzielen, wenn die optisch wirksame Einrichtung 47, beispielsweise wiederum eine Fresnellinse, derart ausgebildet ist, dass aus dem einfallenden divergenten Licht 45 paralleles Licht erzeugt wird. Eine Verbesserung lässt sich auch bereits dann erzielen, wenn das die optisch wirksame Einrichtung 47 verlassende Licht weiterhin divergiert, die Aufweitung bzw. der Divergenzwinkel jedoch gegenüber dem einfallenden divergenten Licht 45 verringert ist.

Fig. 3 zeigt schematisch die Anordnung einer in Fig. 2 nicht dargestellten Nachweiseinrichtung 25, insbesondere einer Kamera, mit welcher die auf der Produktoberfläche erzeugte Laserlinie aufgenommen wird. Die "Blickrichtung" der Nachweiseinrichtung 25, d.h. eine Nachweisebene 59, ist dabei unter einem festen Winkel zur Abtastebene 29 geneigt (vgl. auch Fig. 1). Aus den geometrischen Gegebenheiten der Anordnung kann im Rahmen des Lichtschnittverfahrens aus dem die Laserlinie enthaltenden Bild der Produktoberfläche deren Kontur oder Profil entlang der Laserlinie bestimmt werden.

Bei der Lichtlinie handelt es sich also um diejenige Linie, die durch Schneiden der Produktoberfläche mit der Abtastebene 29 definiert ist.

Fig. 4 zeigt beispielhaft eine Anordnung, bei der sich ein abzutastendes Produkt 11 in einem von zwei Beleuchtungseinrichtungen gebildeten Abtastbereich 41 einer erfindungsgemäßen Abtasteinrichtung befindet.

Jede Beleuchtungseinrichtung umfasst eine Lichtquelle 23 und eine erfindungsgemäße optische Einrichtung 47, beispielsweise eine Fresnellinse. Die Lichtquellen 23 sind in diesem Beispiel oberhalb des Produkts 11 und unterhalb des Produkts 11 auf einer senkrecht zur Basisebene 45 verlaufenden Schnittlinie 53 zwischen Mittelebene 49 und Basisebene 45 positioniert.

Je nach Ausgestaltung und Anordnung von Lichtquelle 23 und optisch wirksamer Einrichtung 47 kann jeweils auch zumindest ein Teil der Produktflanken 57 beleuchtet werden, weshalb erfindungsgemäß zwei Lichtquellen 23 genügen können, um zumindest im Wesentlichen eine "Rundum"-Abtastung des Produkts 11 mit einer überall den Anforderungen hinsichtlich Intensität und Schärfe genügenden Lichtlinie zu ermöglichen.

Während im Ausführungsbeispiel der Fig. 2 bis 4 sich die Fresnellinse 47 über die gesamte Breite erstreckt, so dass das gesamte von der Lichtquelle 23 stammende Licht beeinflusst wird, kann alternativ vorgesehen sein, dass sich ein Teil des Lichts 45 - ungestört von der Fresnellinse 47 - von der Lichtquelle 23 zum Produkt 11 ausbreitet. Hierzu kann die Fresnellinse 47 insbesondere in einem mehr oder weniger breiten Mittelbereich unterbrochen sein, so dass die Fresnellinse aus zwei äußeren Teilstücken für die äußeren Bereiche der divergenten Strahlung 45 besteht, um die abgerundeten Randbereiche und ggf. zumindest teilweise die Flanken 57 des Produktes 11 zu beaufschlagen, wohingegen ein mehr oder weniger großer mittlerer Bereich der Produktunterseite direkt ohne Beeinflussung durch die Fresnellinse 47 von der Lichtquelle 23 beleuchtet wird.

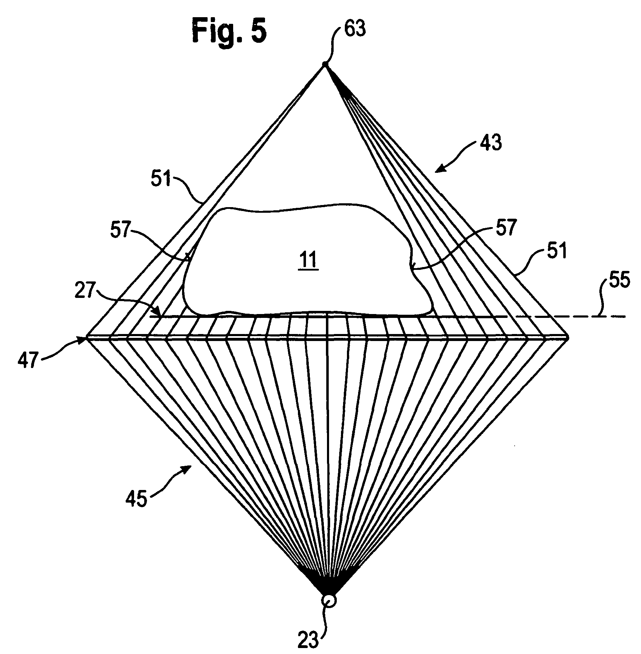

Das Ausführungsbeispiel der Fig. 5 zeigt insbesondere das Zusammenfallen der Einzelstrahlen 51 des konvergenten Lichts 43 in einem Schnittpunkt 63 - von der Lichtquelle 23 ausgesehen - hinter dem Produkt 11.

Je nach konkreter Ausgestaltung der Fresnellinse 47 und der Form des jeweils abzutastenden Produktes 11 kann durch eine derartige Erzeugung konvergenten Lichts 43 erreicht werden, dass zumindest teilweise auch die Flanken 57 des Produktes 11 zusätzlich zur Produktunterseite bzw.-bei Anordnung der Lichtquelle 23 oberhalb des Produktes 11 - der Produktoberseite erreicht werden.

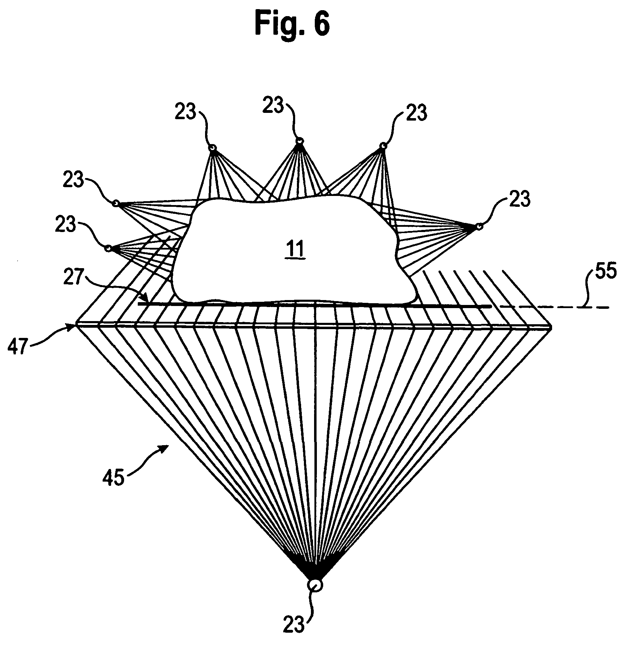

Fig. 6 zeigt in einem Ausführungsbeispiel alle um den für ein Produkt 11 vorgesehenen Abtastbereich herum angeordneten Linienlaser 23. Unterhalb der von der Produktauflage 27 definierten Ebene 55 ist - wie auch z.B. im Ausführungsbeispiel der Fig. 5 - lediglich eine einzige Lichtquelle 23 angeordnet, mit deren divergentem Licht die optisch wirksame Einrichtung 47 zusammenwirkt. Oberhalb der Ebene 55 sind zur Beleuchtung der Produktflanken sowie der Produktoberseite weitere Linienlaser 23 vorgesehen, die derart ausgebildet und angeordnet sind, dass deren Abtastebenen und die Abtastebene der unterhalb der Ebene 55 angeordneten Lichtquelle 23 zusammenfallen. Des Weiteren ist Fig. 6 zu entnehmen, dass bei dem hier dargestellten Produkt 11 die von den oberhalb der Ebene 55 angeordneten Lichtquellen 23 auf der Produktoberfläche erzeugten Lichtlinien einander überlappen.

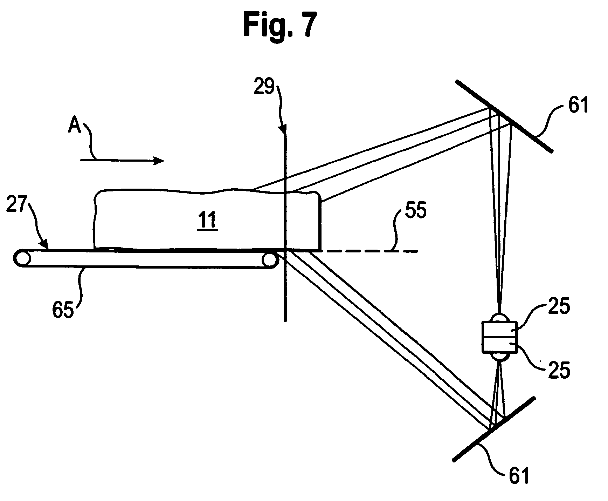

In dem Ausführungsbeispiel der Fig. 7 ist eine mögliche Anordnung zweier als Nachweiseinrichtung dienender Kameras 25 gezeigt. Die Kameras 25 sind an der gleichen Stelle angeordnet und blicken in entgegengesetzte Richtungen, wobei die eine Kamera 25 für die Produktoberseite und die andere Kamera 25 für die Produktunterseite vorgesehen ist und jeweils mittels eines Spiegels 61 dafür gesorgt wird, dass die jeweilige Kamera 25 von ihrem Ort aus auf die jeweilige Produktseite blicken kann.

Der gemeinsame Kameraort wird in Abhängigkeit von den baulichen Gegebenheiten der jeweiligen Abtasteinrichtung bzw. der jeweiligen Aufschneidevorrichtung gewählt. In dem hier dargestellten Ausführungsbeispiel befindet sich der Kameraort - in Produktzuführrichtung A gesehen - hinter der Abtastebene 29, in welcher mittels der hier nicht dargestellten Lichtquellen auf der Produktoberfläche eine Lichtlinie erzeugt wird, die mittels der Kameras 25 erfasst wird.

Wie an anderer Stelle erwähnt, erfolgt die Beleuchtung bzw. Abtastung des Produktes 11 von unten durch eine in der Produktauflage 27 vorgesehene Lücke. Die Lücke kann von einem Zwischenraum zwischen zwei aufeinanderfolgenden Fördereinrichtungen 65, z.B. Förderbändern, gebildet werden, von denen in Fig. 7 nur die vor der Abtastebene 29 gelegene Fördereinrichtung 65 dargestellt ist.

Zu erwähnen ist noch, dass hier der gemeinsame Kameraort 25 unterhalb der von der Produktauflage 27 definierten Ebene 55 vorgesehen ist. Existierende Slicer ermöglichen es, in diesem Bereich den erforderlichen Bauraum für die Kameras 25 vorzusehen. Ermöglicht wird diese vorteilhafte Anordnung durch die Spiegel 61, die dafür sorgen, dass von der Produktoberfläche reflektiertes Licht der Lichtlinie zur jeweiligen Kamera 25 gelangt. Um die einzelnen Komponenten der Abtasteinrichtung vor Verschmutzung und vor anderen äußeren Einflüssen zu schützen, ist insbesondere vorgesehen, dass für das jeweils verwendete Licht transparente Trenneinrichtungen, insbesondere Scheiben aus Glas oder Kunststoff, vorgesehen sind. So können beispielsweise zwischen dem Produkt 11 und den Lichtquellen 23 sowie zwischen dem Produkt 11 und der optisch wirksamen Einrichtung 47 Trennscheiben vorgesehen sein.

### Bezugszeichenliste

- 11: Produkt
- 13: Produktzuführung
- 15: Schneidmesser
- 17: Abtasteinrichtung
- 19: Steuer- und Recheneinrichtung
- 21: Waage
- 23: Lichtquelle, Linienlaser
- 25: Nachweiseinrichtung, Kamera
- 27: Produktauflage
- 29: Abtastebene
- 35: Lücke
- 41: Abtastbereich
- 43: konvergentes Licht
- 45: Lichtstrahl, divergentes Licht
- 47: optisch wirksame Einrichtung, Fresnellinse
- 49: Mittelebene
- 51: Einzelstrahl
- 53: Schnittebene
- 55: Basisebene
- 57: Produktflanke
- 59: Nachweisebene
- 61: Umlenkeinrichtung, Spiegel
- 63: Schnittpunkt
- 65: Fördereinrichtung

- A: Produktzuführrichtung
- C: Steuerdaten
- F(x): gemessene Querschnittsflächen
- Gges: Produktgesamtgewicht
- S: Schneidebene

## Patentansprüche

1. Abtasteinrichtung zum Bestimmen von zumindest teilweisen Querschnittsprofilen von aufzuschneidenden Lebensmittelprodukten (11) nach dem Lichtschnittverfahren, mit
wenigstens einer Beleuchtungseinrichtung (23, 47) zum Erzeugen einer Lichtlinie auf der Oberfläche eines Produktes (11), und wenigstens einer Nachweiseinrichtung (25) zur Aufnahme von die Lichtlinie enthaltenden Bildern der Produktoberfläche,
wobei die Beleuchtungseinrichtung wenigstens eine Lichtquelle (23), die dazu ausgebildet ist, einen sich in Richtung eines Abtastbereiches (41) für das Produkt (11) in einer Abtastebene (29) ausbreitenden und sich dabei aufweitenden Lichtstrahl (45) zu erzeugen, und eine im Ausbreitungsweg des sich aufweitenden Lichtstrahls (45) angeordnete optisch wirksame Einrichtung (47) umfasst, die dazu ausgebildet ist, der Divergenz zumindest eines Teils des einfallenden Lichts entgegenzuwirken,
**dadurch gekennzeichnet,**
**dass** die optisch wirksame Einrichtung wenigstens eine Fresnellinse (47) umfasst, die in der Abtastebene wirksam ist und der Aufweitung des Lichtstrahls in der Abtastebene entgegenwirkt.

2. Abtasteinrichtung nach Anspruch 1,
**dadurch gekennzeichnet,**
**dass** die optisch wirksame Einrichtung (47) dazu ausgebildet ist, paralleles oder konvergentes Licht (43) zu erzeugen.

3. Abtasteinrichtung nach Anspruch 1 oder 2,
**dadurch gekennzeichnet,**
**dass** die optisch wirksame Einrichtung wenigstens eine Linse (47) und/oder wenigstens ein Prisma umfasst.

4. Abtasteinrichtung nach einem der vorhergehenden Ansprüche,
**dadurch gekennzeichnet,**
**dass** die Ausdehnung der optisch wirksamen Einrichtung (47) in der Abtastebene (29) größer ist als die für ein abzutastendes Produkt (11) im Abtastbereich (41) maximal vorgesehene entsprechende Ausdehnung, und/oder dass die optisch wirksame Einrichtung (47) dazu ausgebildet ist, für eine Beleuchtung auch zumindest eines Teils wenigstens einer Produktflanke (57) zusätzlich zu einer Oberseite oder einer Unterseite eines abzutastenden Produktes (11) zu sorgen.

5. Abtasteinrichtung nach einem der vorhergehenden Ansprüche,
**dadurch gekennzeichnet,**
**dass** die Beleuchtungseinrichtung eine Mehrzahl von Lichtquellen (23) umfasst, die jeweils einen sich in Richtung des Abtastbereiches (41) in einer Abtastebene (29) ausbreitenden und sich dabei aufweitenden Lichtstrahl (45) erzeugen und um den Abtastbereich (41) herum verteilt angeordnet sind, wobei insbesondere die Abtastebenen (29) der Lichtquellen (23) zusammenfallen.

6. Abtasteinrichtung nach Anspruch 5,
**dadurch gekennzeichnet,**
**dass** jeder Lichtquelle (23) eine der Divergenz zumindest eines Teils des einfallenden Lichts entgegenwirkende optisch wirksame Einrichtung (47) zugeordnet ist, und/oder dass jeder Lichtquelle (23) eine Nachweiseinrichtung (25) zugeordnet ist.

7. Abtasteinrichtung nach einem der vorhergehenden Ansprüche,
**dadurch gekennzeichnet,**
**dass** die optisch wirksame Einrichtung (47) bezüglich einer Mittelebene (49), die senkrecht zur Abtastebene (29) verläuft und in der die Lichtquelle (23) liegt, symmetrisch wirksam ist.

8. Abtasteinrichtung nach Anspruch 7,
**dadurch gekennzeichnet,**
**dass** die optisch wirksame Einrichtung (47) konvergentes Licht (43) erzeugt und sich jedes Paar von Einzelstrahlen (51), die unter dem gleichen Winkel zu einer Schnittlinie (53) zwischen Abtastebene (29) und Mittelebene (49) verlaufen, in einem Punkt kreuzt, der auf der Schnittlinie (53) und hinter einer senkrecht zur Mittelebene (49) verlaufenden Basisebene (55) liegt, wobei vorzugsweise die Entfernung des auf der Schnittlinie (53) liegenden Kreuzungspunktes von der Lichtquelle (23) in Abhängigkeit von dem Abstand des Ursprungs der Einzelstrahlen (51) in der optisch wirksamen Einrichtung (47) von der Schnittlinie (53) variiert, insbesondere derart, dass die Entfernung umso größer ist, je größer der Abstand ist.

9. Abtasteinrichtung nach einem der vorhergehenden Ansprüche,
**dadurch gekennzeichnet,**
**dass** im Ausbreitungsweg des Lichtes zwischen der Produktoberfläche und der Nachweiseinrichtung (25) wenigstens eine Umlenkeinrichtung (61) für das Licht vorgesehen ist, insbesondere ein ebener Spiegel.

10. Abtasteinrichtung nach einem der vorhergehenden Ansprüche,
**dadurch gekennzeichnet,**
**dass** eine erste Nachweiseinrichtung (25) für eine erste Seite des Produktes (11) und eine zweite Nachweiseinrichtung (25) für eine zweite Seite des Produktes (11) in enger räumlicher Nähe zueinander, insbesondere unmittelbar nebeneinander, angeordnet sind, wobei vorzugsweise die Nachweiseinrichtungen (25) entgegengesetzten Richtungen zugewandt sind.

11. Abtasteinrichtung nach Anspruch 10,
**dadurch gekennzeichnet,**
**dass** für jede der beiden Nachweiseinrichtungen (25) im Ausbreitungsweg des Lichtes zwischen der jeweiligen Produktoberfläche und der Nachweiseinrichtung (25) wenigstens eine, insbesondere genau eine, Umlenkeinrichtung (61) für das Licht vorgesehen ist, insbesondere ein ebener Spiegel.

12. Vorrichtung zum Aufschneiden von Lebensmittelprodukten (11), insbesondere Hochleistungsslicer, mit
einer Produktzuführung (13), die dazu ausgebildet ist, wenigstens ein aufzuschneidendes Produkt (11) einer Schneidebene S zuzuführen, in der sich wenigstens ein Schneidmesser (15), insbesondere rotierend und/oder umlaufend, bewegt, und
wenigstens einer Abtasteinrichtung (17) nach einem der vorhergehenden Ansprüche.

13. Vorrichtung nach Anspruch 12,
**dadurch gekennzeichnet,**
**dass** die Produktzuführung (13) dazu ausgebildet ist, das Produkt (11) durch den Abtastbereich (41) der Abtasteinrichtung (17) zu führen, wobei vorzugsweise die Abtasteinrichtung (17) derart weit vor-in Produktzuführrichtung A gesehen - der Schneidebene S angeordnet ist, dass vor Beginn des Aufschneidens des Produktes (11) das Produkt (11) vollständig abgetastet ist.

14. Vorrichtung nach Anspruch 12 oder 13,
**dadurch gekennzeichnet,**
**dass** eine Produktauflage (27), auf der das Produkt (11) aufliegt, eine Ebene definiert, die mit einer Basisebene (55) der Abtasteinrichtung (17) zusammenfällt,
wobei die Basisebene (55) dadurch definiert ist, dass die optisch wirksame Einrichtung (47) der Abtasteinrichtung (17) bezüglich einer Mittelebene (49), die senkrecht zur Abtastebene (29) verläuft und in der die Lichtquelle (23) liegt, symmetrisch wirksam ist, und dass die optisch wirksame Einrichtung (47) konvergentes Licht (43) erzeugt und sich jedes Paar von Einzelstrahlen (51), die unter dem gleichen Winkel zu einer Schnittlinie (53) zwischen Abtastebene (29) und Mittelebene (49) verlaufen, in einem Punkt kreuzen, der auf der Schnittlinie (53) und hinter der senkrecht zur Mittelebene (49) verlaufenden Basisebene (55) liegt.

15. Vorrichtung nach einem der Ansprüche 12 bis 14,
**dadurch gekennzeichnet,**
**dass** eine erste Nachweiseinrichtung (25) für eine erste Seite des Produktes (11) und eine zweite Nachweiseinrichtung (25) für eine zweite Seite des Produktes (11) in enger räumlicher Nähe zueinander, insbesondere unmittelbar nebeneinander, an einer Stelle angeordnet sind, die - in Produktzuführrichtung A gesehen - hinter der Abtastebene (29) und/oder unterhalb einer durch eine Produktauflage (27) definierten Ebene (55) gelegen ist.

## Claims

1. A scanning device for determining at least partial cross-sectional profiles of food products (11) to be sliced in accordance with the light cutting process, comprising
at least one illumination device (23, 47) for generating a light line on the surface of a product (11); and
at least one detection device (25) for taking images of the product surface including the light line,
wherein the illumination device comprises at least one light source (23) which is configured to generate a light beam (45) propagating in the direction of a scanning region (41) for the product (11) in a scanning plane (29) and widening in so doing and an optically effective device (47) which is arranged in the propagation path of the widening light beam (45) and which is configured to counter the divergence of at least some of the incident light,
**characterized in that**
the optically effective device comprises at least one Fresnel lens (47) which is active in the scanning plane and counters the expansion of the light beam in the scanning plane.

2. A scanning device in accordance with claim 1,
**characterized in that**
the optically effective device (47) is configured to generate parallel or convergent light (43).

3. A scanning device in accordance with claim 1 or claim 2,
**characterized in that**
the optically effective device comprises at least one lens (47) and/or at least one prism.

4. A scanning device in accordance with any one of the preceding claims,
**characterized in that**
the extent of the optically effective device (47) is larger in the scanning plane (29) than the corresponding extent provided as a maximum for a product (11) to be scanned in the scanning region (41); and/or **in that** the optically effective device (47) is configured to provide an illumination also of at least a part of at least one product flank (57) in addition to an upper side or a lower side of a product (11) to be scanned.

5. A scanning device in accordance with any one of the preceding claims,
**characterized in that**
the illumination device comprises a plurality of light sources (23) which each generate a light beam (45) propagating in the direction of the scanning region (41) in a scanning plane (29) and widening in so doing and which are arranged distributed around the scanning region (41), wherein in particular the scanning planes (29) of the light sources (23) coincide.

6. A scanning device in accordance with claim 5,
**characterized in that**
an optically effective device (47) countering the divergence of at least some of the incident light is associated with each light source (23); and/or **in that** a detection device (25) is associated with each light source (23).

7. A scanning device in accordance with any one of the preceding claims,
**characterized in that**
the optically effective device (47) is symmetrically effective with respect to a center plane (49) which extends perpendicular to the scanning plane (29) and lies in the light source (23).

8. A scanning device in accordance with claim 7,
**characterized in that**
the optically effective device (47) generates convergent light (43) and each pair of individual rays (51), which extend at the same angle to a line of intersection (53) between the scanning plane (29) and a center plane (49), intersects at a point which lies on the line of intersection (53) and behind a base plane (55) extending perpendicular to the center plane (49), with the distance of the point of intersection disposed on the line of intersection (53) from the light source (23) preferably varying in dependence on the spacing of the origin of the individual rays (51) in the optically effective device (47) from the line of intersection (53), in particular such that the distance is the larger, the larger the spacing.

9. A scanning device in accordance with any one of the preceding claims,
**characterized in that**
at least one deflection device (61) for the light, in particular a planar mirror, is provided in the propagation path of the light between the product surface and the detection device (25).

10. A scanning device in accordance with any one of the preceding claims,
**characterized in that**
a first detection device (25) for a first side of the product (11) and a second detection device (25) for a second side of the product (11) are arranged in close spatial proximity to one another, in particular directly next to one another, with the detection devices (25) preferably facing in opposite directions.

11. A scanning device in accordance with claim 10,
**characterized in that**
at least one, in particular precisely one, deflection device (61) for the light, in particular a planar mirror, is provided for each of the detection devices (25) in the propagation path of the light between the respective product surface and the detection device (25).

12. An apparatus for slicing food products (11), in particular a high-performance slicer, comprising
a product feed (13) which is configured to feed at least one product (11) to be sliced to a cutting plane S in which at least one cutting blade (15) moves, in particular in a rotating and/or orbiting manner; and
at least one scanning device (17) in accordance with any one of the preceding claims.

13. An apparatus in accordance with claim 12,
**characterized in that**
the product feed (13) is configured to conduct the product (11) through the scanning region (41) of the scanning device (17), with the scanning device (17) preferably being arranged so far in front of the cutting plane S - viewed in the product feed direction A - that the product (11) is completely scanned before the start of the slicing of the product (11).

14. An apparatus in accordance with claim 12 or claim 13,
**characterized in that**
a product support (27) on which the product (11) lies defines a plane which coincides with a base plane (55) of the scanning device (17), wherein the base plane (55) is defined **in that** the optically effective device (47) of the scanning device (17) is symmetrically effective with respect to a center plane (49) which extends perpendicular to the scanning plane (29) and in which the light source (23) lies; and **in that** the optically effective device (47) generates convergent light (43) and each pair of individual rays (51) which extend at the same angle to a line of intersection (53) between the scanning plane (29) and the center plane (49) intersect at a point which lies on the line of intersection (53) and behind the base plane (55) extending perpendicular to the center plane (49).

15. An apparatus in accordance with any one of the claims 12 to 14,
**characterized in that**
a first detection device (25) for a first side of the product (11) and a second detection device (25) for a second side of the product (11) are arranged in close spatial proximity to one another, in particular directly next to one another, at a point which - viewed in the product feed direction A - lies behind the scanning plane (29) and/or beneath a plane (55) defined by a product support (27).

## Revendications

1. Système de palpage pour déterminer des profils de section au moins partielle de produits alimentaires (11) à découper, selon le principe de coupe à la lumière, comprenant
au moins un dispositif d'éclairage (23, 47) pour engendrer une ligne de lumière sur la surface d'un produit (11), et
au moins un dispositif de mise en évidence (25) pour la prise d'images de la surface du produit contenant la ligne de lumière,
dans lequel le dispositif d'éclairage inclut au moins une source de lumière (23) qui est réalisée pour engendrer un rayon de lumière (45) qui se propage en direction d'une région de palpage (41) pour le produit (11) dans un plan de palpage (29) et qui s'élargit dans ce plan, et un dispositif actif sur le plan optique (47) agencé dans le trajet de propagation du rayon de lumière (45) qui s'élargit et réalisé pour s'opposer à la divergence d'au moins une partie de la lumière incidente,
**caractérisé en ce que**
le dispositif actif sur le plan optique inclut au moins une lentille de Fresnel (47), qui agit dans le plan de palpage et s'oppose à l'élargissement du rayon de lumière dans le plan de palpage.

2. Système de palpage selon la revendication 1,
**caractérisé en ce que** le dispositif actif sur le plan optique (47) est réalisé pour engendrer une lumière parallèle ou convergente (43).

3. Système de palpage selon la revendication 1 ou 2,
**caractérisé en ce que** le dispositif actif sur le plan optique inclut au moins une lentille (47) et/ou au moins un prisme.

4. Système de palpage selon l'une des revendications précédentes,
**caractérisé en ce que** l'extension du dispositif actif sur le plan optique (47) dans le plan de palpage (29) est plus grande que l'extension correspondante prévue au maximum pour un produit (11) à palper dans la région de palpage (41), et/ou **en ce que** le dispositif actif sur le plan optique (47) est réalisé pour assurer un éclairage également d'au moins une partie d'au moins un flanc (57) du produit en plus d'une face supérieure d'une face inférieure d'un produit à palper (11).

5. Système de palpage selon l'une des revendications précédentes,
**caractérisé en ce que** le dispositif d'éclairage inclut une pluralité de sources de lumière (23), qui engendrent respectivement un rayon de lumière (45) qui se propage en direction de la région de palpage (41) dans un plan de palpage (29) et qui s'élargit dans ce plan, lesdits rayons étant agencés de façon répartie tout autour de la région de palpage (41) et en particulier les plans de palpage (29) des sources de lumière (23) coïncident.

6. Système de palpage selon la revendication 5,
**caractérisé en ce qu'**un dispositif actif sur le plan optique (47) s'opposant à la divergence d'au moins une partie de la lumière incidente est associé à chaque source de lumière (23), et/ou **en ce qu'**un dispositif de mise en évidence (25) est associé à chaque source de lumière (23).

7. Système de palpage selon l'une des revendications précédentes,
**caractérisé en ce que** le dispositif actif sur le plan optique (47) a un effet symétrique par rapport à un plan médian (49) qui s'étend perpendiculairement au plan de palpage (29) et dans lequel est située la source de lumière (23).

8. Système de palpage selon la revendication 7,
**caractérisé en ce que** le dispositif actif sur le plan optique (47) engendre une lumière convergente (43), et chaque paire de rayons individuels (51), qui s'étendent sous le même angle par rapport à une ligne d'intersection (53) entre plan de palpage (29) et plan médian (49), se croisent en un point qui se trouve sur la ligne d'intersection (53) et derrière un plan de base (55) qui s'étend perpendiculairement au plan médian (49), et de préférence l'éloignement du point de croisement situé sur la ligne d'intersection (53) depuis la source de lumière (23) varie en fonction de la distance de l'origine des rayons individuels (51) dans le dispositif actif sur le plan optique (47) depuis la ligne d'intersection (53), en particulier de telle façon que plus l'éloignement est important plus grande est la distance.

9. Système de palpage selon l'une des revendications précédentes,
**caractérisé en ce qu'**au moins un dispositif de déflexion (61) pour la lumière est prévu dans le trajet de propagation de la lumière entre la surface du produit et le dispositif de mise en évidence (25), en particulier un miroir plan.

10. Système de palpage selon l'une des revendications précédentes,
**caractérisé en ce qu'**un premier dispositif de mise en évidence (25) pour un premier côté du produit (11) et un second dispositif de mise en évidence (25) pour un second côté du produit (11) sont agencés à proximité étroite dans l'espace l'un par rapport à l'autre, en particulier directement l'un à côté de l'autre, et de préférence les dispositifs de mise en évidence (25) sont tournés dans des directions opposées.

11. Système de palpage selon la revendication 10,
**caractérisé en ce que** pour chacun des deux dispositifs de mise en évidence (25) et dans le trajet de propagation de la lumière entre la surface respective du produit et le dispositif de mise en évidence (25) il est prévu au moins un, et en particulier exactement un, dispositif de déflexion (61) pour la lumière, en particulier un miroir plan.

12. Appareil pour découper des produits alimentaires (11),
en particulier trancheuse à haute performance, comprenant une amenée de produit (13) qui est réalisée pour amener au moins un produit à découper (11) à un plan de coupe (S) dans lequel au moins un couteau de coupe (15) se déplace, en particulier en rotation et/ou en mouvement orbital, et
au moins un système de palpage (17) selon l'une des revendications précédentes.

13. Appareil selon la revendication 12,
**caractérisé en ce que** l'amenée de produit (13) est réalisée pour mener le produit (11) à travers la région de palpage (41) du système de palpage (17), et de préférence le système de palpage (17) est agencé devant le plan de coupe (S), vu dans la direction d'amenée du produit (A), aussi loin que le produit (11) est entièrement palpé avant le commencement de la découpe du produit (11).

14. Appareil selon la revendication 12 ou 13,
**caractérisé en ce que**
un appui de produit (27), sur lequel s'appuie le produit (11), définit un plan qui coïncide avec un plan de base (55) du système de palpage (17),
dans lequel le plan de base (55) est défini **en ce que** le dispositif actif sur le plan optique (47) du système de palpage (17) est actif de manière symétrique par rapport à un plan médian (49), qui s'étend perpendiculairement au plan de palpage (29) et dans lequel est située la source de lumière (23), et
**en ce que** le dispositif actif sur le plan optique (47) engendre une lumière convergente (43) et chaque paire de rayons individuels (51), qui s'étendent sous le même angle par rapport à une ligne d'intersection (53) entre le plan de palpage (29) et le plan médian (49), se croisent en un point qui se trouve sur la ligne d'intersection (53) et derrière le plan de base (55) qui s'étend perpendiculairement au plan médian (49).

15. Appareil selon l'une des revendications 12 à 14,
**caractérisé en ce qu'**un premier dispositif de mise en évidence (25) pour un premier côté du produit (11) et un second dispositif de mise en évidence (25) pour un second côté du produit (11) sont agencés à proximité étroite dans l'espace l'un par rapport à l'autre, en particulier immédiatement l'un à côté de l'autre, un emplacement qui, vu dans la direction d'amenée (A) du produit, est situé derrière le plan de palpage (29) et/ou au-dessous d'un plan (55) défini par un appui de produit (27).
